(19) Europäisches Patentamt
European Patent Office
Office européen des brevets

(11) EP 4 775 715 A1

# (12) EUROPEAN PATENT APPLICATION
published in accordance with Art. 153(4) EPC

(43) Date of publication:
**15.07.2026 Bulletin 2026/29**

(21) Application number: **24946566.7**

(22) Date of filing: **13.09.2024**

(51) International Patent Classification (IPC):
*C25D 1/04* (2006.01)

(86) International application number:
**PCT/CN2024/118888**

(87) International publication number:
**WO 2026/055930 (19.03.2026 Gazette 2026/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Jiujiang Defu Technology Co., Ltd**
**Jiujiang, Jiangxi 332000 (CN)**

(72) Inventors:
- **ZHOU, Fengcheng**
  **Jiujiang, Jiangxi 332000 (CN)**
- **LIU, Chao**
  **Jiujiang, Jiangxi 332000 (CN)**
- **CHU, Changshun**
  **Jiujiang, Jiangxi 332000 (CN)**
- **WEN, Min**
  **Jiujiang, Jiangxi 332000 (CN)**
- **LUO, Jia**
  **Jiujiang, Jiangxi 332000 (CN)**
- **JIANG, Yang**
  **Jiujiang, Jiangxi 332000 (CN)**

(74) Representative: **Canzler & Bergmeier Patentanwälte Partnerschaft mbB**
**Despag-Straße 6**
**85055 Ingolstadt (DE)**

## (54) NOVEL ELECTROLYTIC COPPER FOIL AND PREPARATION METHOD THEREFOR, AND NEGATIVE ELECTRODE SHEET AND SECONDARY BATTERY

(57) The present disclosure relates to an electrolytic copper foil, a preparation method thereof, a negative electrode plate, and a secondary battery. The electrolytic copper foil includes at least one copper layer. At least a part of a surface of the copper layer is provided with an array of through holes, and the array of through holes is formed of M*N through holes arranged in M rows and N columns, each row of through holes in the array are arranged in an x direction, and each column of through holes in the array are arranged in a y direction. The x direction and the y direction are intersected with each other and located in the same plane. A surface area of the copper layer covered by the array is an array area, and a surface area of the copper layer not covered by the array is a non-array area, and the weight per square meter of the array area satisfies a certain relationship. The electrolytic copper foil can effectively improve lithium ion conduction, and as a battery negative current collector, can effectively improve the performance of the battery, especially the solid-state battery.

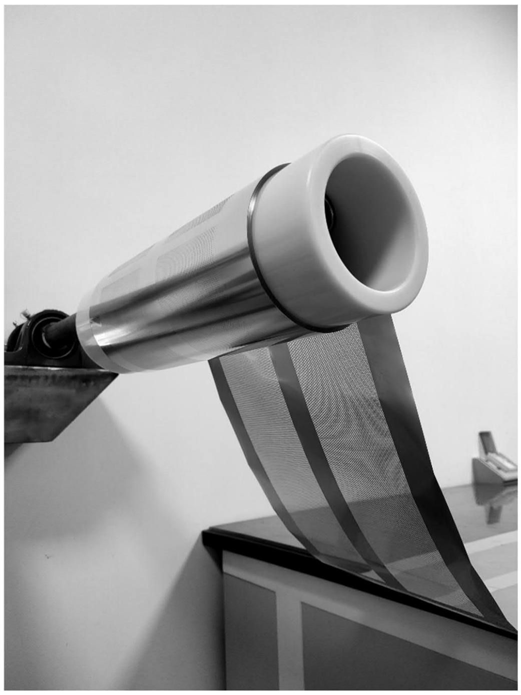

FIG. 4

## Description

### FIELD OF DISCLOSURE

The present disclosure relates to the technical field of secondary batteries, in particular to an electrolytic copper foil, a preparation method thereof, a negative electrode plate, and a secondary battery.

### DESCRIPTION OF RELATED ARTS

In recent years, sales of new energy vehicles are gradually increasing every year, and a power battery is an indispensable core accessory of a new energy vehicle. Currently, power batteries used are substantially liquid lithium-ion batteries. However, the energy density of the liquid lithium-ion batteries is close to their upper limits, and it is difficult to have a big breakthrough. Solid-state batteries are a next generation product to replace the liquid lithium-ion batteries. The difference between the solid-state batteries and the liquid lithium-ion batteries is that a solid electrolyte is adopted in a solid-state battery, which replaces a liquid electrolyte. Furthermore, the solid-state batteries can be divided into semi-solid batteries and full-solid batteries according to the content of the liquid electrolyte. The semi-solid batteries contain some electrolyte solution generally with a content between 5% and 10%, and the all-solid-state batteries refer to those that all electrolytes are solid and no liquid electrolyte is included. The semi-solid battery serves as an intermediate transition state from the liquid battery to the all-solid-state battery. Generally, "10% of liquid in the battery" is regarded as a dividing line between the semi-solid battery and the liquid battery. Currently, the semi-solid batteries are gradually being commercialized. Conversion from the liquid battery to the solid-state battery is a general development trend of battery technology over the long term. There are two factors driving the conversion from the liquid battery to the solid-state battery: higher safety and higher energy density of the solid-state battery, in which the safety is a short-term driving factor and the energy density is a medium-and long-term driving factor.

An electrolytic copper foil, as a negative electrode current collector of the lithium-ion battery, is an important part of an electrode structure in the lithium-ion battery, which not only acts as a carrier of negative electrode active materials in the battery, but also functions in collecting transmission current, which has a great influence on internal resistance and cycle performance of the lithium-ion battery. In the solid-state battery, because the electrolyte is all solid, with a conduction process of lithium ions being more complicated, it is difficult for a conventional double-sided copper foil to meet the characteristic requirements of the solid-state battery, and thus it is necessary to design a special copper foil to match the solid-state batteries.

### SUMMARY OF THE PRESENT INVENTION

An electrolytic copper foil, a preparation method thereof, a negative electrode plate, and a secondary battery are provided in the present disclosure. The lithium ion conduction of the electrolytic copper foil and the performance of a secondary battery are improved.

In order to achieve the above objects, an electrolytic copper foil is provided in a first aspect of the present disclosure, which includes at least one copper layer. At least a part of a surface of the at least one copper layer is provided with an array of through holes, and the array of through holes is formed by M*N through holes arranged in M rows and N columns, where M≥1 and N≥1, M and N are positive integers, each row of through holes in the array of through holes are arranged in an x direction, and each column of through holes in the array of through holes are arranged in a y direction. The x direction and the y direction are intersected with each other and located in the same plane, and a thickness direction of the at least one copper layer is a z direction which is perpendicular to both the x direction and the y direction.

A thickness of the at least one copper layer is expressed as h, a largest distance between a center point of a through hole and an edge of the through hole is defined as a major semi-axis, having a length expressed as a; and a shortest distance between the center point of the through hole and the edge of the through hole is defined as a minor semi-axis, having a length expressed as b. The shortest vertical distance in the x direction between adjacent through holes is expressed as A, and the shortest vertical distance in a Y direction between adjacent through holes is expressed as B, and the Y direction is perpendicular to the x direction. A surface area of the copper layer covered by the array of through holes is an array area, and a surface area of the copper layer not covered by the array of through holes is a non-array area. The weight per square meter of the array area is denoted as m as follows:

$$m = k * 8.96 * 10^6 * h * \left[1 - \frac{\pi ab}{(2a+A)*(2b+B)}\right],$$

where k is any value between 0.9 and 1.1.

The electrolytic copper foil according to the present disclosure can improve the peel resistance of active materials on the copper foil, improve its adhesion in the process of charging and discharging, and also improve the wettability of the electrolyte, thereby improving lithium ion transmission efficiency, effectively solving the lithium ion conduction problem of the traditional copper foil in the solid-state battery. As a battery negative current collector, the electrolytic copper foil according to the present disclosure can effectively improve the performance of the battery, especially the solid-state battery.

In any of the embodiments of the present disclosure, A is 200 μm to 2000 μm, optionally 400 μm to 1500 μm; and/or B is 200 μm to 2000 μm, optionally 400 μm to 1500 μm.

In any of the embodiments of the present disclosure, a is 100 μm to 1500 μm, optionally 200 μm to 1000 μm; and/or b is 100 μm to 1500 μm, optionally 200 μm to 1000 μm.

In any of the embodiments of the present disclosure, porosity of the array area is 5% to 50%, optionally 10% to 40%.

In any of the embodiments of the present disclosure, the array of through holes is arranged in a rectangular array and/or a diamond array.

In any of the embodiments of the present disclosure, the through hole is circular and/or elliptical.

In any of the embodiments of the present disclosure, the at least one copper layer has two surfaces opposite to each other in the thickness direction of the at least one copper layer, namely a first surface and a second surface, and the roughness and/or brightness of the first surface and the second surface are different from each other.

In any of the embodiments of the present disclosure, the thickness of the at least one copper layer is 3 μm to 15 μm.

In any of the embodiments of the present disclosure, the tensile strength of the electrolytic copper foil at room temperature is 15 $kgf/mm^2$ to 30 $kgf/mm^2$, and the tensile strength of the non-array area of the at least one copper layer at room temperature is 30 $kgf/mm^2$ to 70 $kgf/mm^2$, and the room temperature is 25±5°C.

A preparation method of the electrolytic copper foil is provided in a second aspect of the present disclosure, which includes:

placing an anode and a cathode to be plated in an electrolyte solution for electrolysis to obtain the electrolytic copper foil. The cathode is provided with insulating shielding dots arranged in an array.

In any of the embodiments of the present disclosure, the electrolyte solution contains copper ions, sulfuric acid, halogen ions, and an organic additive.

Optionally, a concentration of the copper ions in the electrolyte solution is 70 g/L to 130 g/L.

Optionally, a concentration of the sulfuric acid in the electrolyte solution is 80 g/L to 150 g/L.

Optionally, a concentration of the chloride ion in the electrolyte solution is 15 mg/L to 50 mg/L.

Optionally, a concentration of the organic additive in the electrolyte solution is 20 mg/L to 500 mg/L.

In any of the embodiments of the present disclosure, the organic additive includes a leveling agent, a brightener, and a wetting agent.

The leveling agent is a nitrogen-containing compound, optionally including one or more of collagen, gelatin, thiourea, allyl thiourea, ethylene thiourea, and 2-amino-4-methylbenzothiazole, and optionally, a mass concentration of the leveling agent in the electrolyte solution is 0.1 mg/L to 40 mg/L.

The brightener is an organic bivalent sulfide, and optionally includes one or more of bis-(sodium sulfopropyl)-disulfide, N,N-dimethyldithioformamide propylsolfonic acid sodium, sodium 3-mercaptopropane sulfonate, sodium 3-(benzothiazol-2-ylthio)-1-propanesulfonate, and isothiourea-propane sulfonate, and optionally a mass concentration of the brightener in the electrolyte solution is 0.1 mg/L to 400 mg/L.

The wetting agent is a polyether compound, optionally including one or more of polyethylene glycol, hydroxyethyl cellulose, polypropylene glycol, allyl polyethylene glycol, and fatty amine polyoxyethylene ether, and optionally a mass concentration of the wetting agent in the electrolyte solution is 1 mg/L to 40 mg/L.

In any of the embodiments of the present disclosure, the temperature of the electrolyte solution during electrolysis is 45°C to 60°C.

A negative electrode plate is provided in a third aspect of the present disclosure, which includes the electrolytic copper foil described in the first aspect or an electrolytic copper foil prepared by the method described in the second aspect.

A secondary battery is provided in a fourth aspect of the present disclosure, which includes the negative electrode plate described in the third aspect.

In any of the embodiments of the present disclosure, the secondary battery is a liquid battery, a semi-solid battery, or a solid-state battery.

An electric device is provided in a fifth aspect of the present disclosure, which includes at least one secondary battery described in the fourth aspect.

The electric device of this disclosure includes the secondary battery according to the present disclosure, and thus at least has the same advantages as the secondary battery.

Details of one or more embodiments of the present disclosure are set forth in the following drawings and description. Other features, objects, and advantages of the present disclosure will be apparent from the description, drawings, and claims.

## BRIEF DESCRIPTION OF THE DRAWINGS

In order to better describe and illustrate the embodiments or examples provided by this disclosure, reference can be made to one or more figures. Additional details or examples used to describe the drawings should not be considered as limiting the scope of any of the disclosed applications, currently described embodiments or examples, and best modes currently understood for these applications. Moreover, like parts are denoted by like reference numerals throughout the drawings. In the drawings:

FIG. 1 is a schematic view showing an array of through holes arranged in a rectangular shape according to the present disclosure;

FIG. 2 is a schematic view showing the array of through holes arranged in a diamond shape according to the present disclosure;

FIG. 3 is a SEM image of an array area of an electrolytic copper foil prepared in Embodiment 1 of the present disclosure; and

FIG. 4 is a photo of a wound finished product of the electrolytic copper foil prepared in Embodiment 1 of the present disclosure.

## DETAILED DESCRIPTION OF THE PREFERRED EMBODIMENTS

Hereinafter, some embodiments of an electrolytic copper foil, a preparation method thereof, a negative electrode plate, a secondary battery, and an electrical device are described in detail with appropriate reference to the attached drawings. However, there may be a case where unnecessary detailed descriptions are omitted. For example, there are cases where detailed descriptions of well-known matters and repeated descriptions of an actually same structure are omitted. This is to prevent the following description from becoming unnecessarily lengthy and to facilitate understanding by those skilled in the art. In addition, the drawings and the following description are provided for full understanding of the disclosure by those skilled in the art, and are not intended to limit subject matters recorded in the claims.

A "range" provided in this disclosure can be defined in the form of a lower limit and an upper limit. A given range is defined by selecting a lower limit and an upper limit, and the selected lower limit and upper limit define boundaries of a special range. The range defined in this way can be inclusive or exclusive, and any of the end values can be independently included or excluded, and can be arbitrarily combined, that is, any of the lower limits can be combined with any of the upper limits to form a range. For example, if ranges from 60 to 120 and from 80 to 110 are listed for specific parameters, it is understood that ranges from 60 to 110 and from 80 to 120 are also expected. In addition, if the listed minimum range values are 1 and 2, and if the listed maximum range values are 3, 4, and 5, the following ranges can all be expected: 1 to 3, 1 to 4, 1 to 5, 2 to 3, 2 to 4, and 2 to 5. In this disclosure, unless otherwise specified, a numerical range "a to b" indicates an abbreviated representation of any combination of real numbers between A and B, where a and b are both real numbers. For example, a numerical range "0 to 5" indicates that all of the real numbers between "0 and 5" have been listed herein, and "0 to 5" is only an abbreviated representation of the combination of these numbers. In addition, when a parameter is an integer larger than or equal to 2, it is equivalent to listing the parameter as integers 2, 3, 4, 5, 6, 7, 8, 9, 10, 11, 12, etc. For example, when a parameter is an integer selected from "2 to 10", it is equivalent to listing integers 2, 3, 4, 5, 6, 7, 8, 9, and 10.

In this disclosure, "multiple" and "a plurality of" mean that the number is greater than or equal to 2 unless otherwise specified. For example, "one or more" means one or more than two.

Unless otherwise specified, all of the embodiments and alternative embodiments of this disclosure can be combined with each other to form a new technical scheme.

"Embodiment" herein means that a particular feature, structure, or characteristic described in combination with the embodiment can be included in at least one of the embodiments or implementations of the present disclosure. Occurrence of this phrase in various parts in the specification does not necessarily refer to the same embodiment, nor is it an independent or alternative embodiment mutually exclusive with other embodiments. It is understood explicitly and implicitly by those skilled in the art that the embodiments described herein can be combined with other embodiments. The "implementation" mentioned herein can be understood similarly.

It can be understood by those skilled in the art that in the methods of respective implementations or embodiments, a writing order of respective steps does not mean a strict execution order to constitute any restriction on an implementation

process, and a detailed execution order of the respective steps should be determined according to their function and possible internal logic. Unless otherwise specified, all steps in this disclosure can be performed sequentially or randomly, preferably sequentially. For example, the method includes steps (a) and (b), which means that the method can include steps (a) and (b) performed in sequence, and can also include steps (b) and (a) performed in sequence. For example, the method can also involve step (c), which indicates that step (c) can be added to the method in any order. For example, the method can include these steps in an order of (a), (b) and (c), (a), (c) and (b), or (c), (a) and (b).

In this disclosure, in technical features or technical solutions described in words such as "containing", "comprising" and "including", unless otherwise specified, additional members other than listed members are not excluded, which can be regarded as providing both closed features or solutions composed of listed members and open features or solutions including additional members in addition to listed members. For example, A includes a1, a2, and a3, which may include other members or may not include additional members unless otherwise specified. It can be regarded as not only providing a feature or scheme of "A consists of a1, a2, and a3", but also a feature or scheme of "A includes not only a1, a2, and a3, but also other members". In this disclosure, unless otherwise specified, A (such as B) means that B is a non-limiting example of A, and it can be understood that A is not limited to B.

In this disclosure, "optionally" and "optional" mean that the feature in question may or may not be present, that is, any one of the two parallel schemes "presence" or "absence". If "optional" occurs at multiple sites in a technical scheme, respective "optional" items are independent of each other unless otherwise specified and with no contradictions or mutual constraints.

In solid-state batteries, a traditional copper foil is used as a current collector, and adhesion between the traditional copper foil and the negative active material is low, and the wettability of electrolyte on an electrode surface is poor, resulting in a conduction problem of lithium ions.

On this basis, an electrolytic copper foil is provided in a first aspect of the present disclosure, which includes at least one copper layer. At least part of the surface of the at least one copper layer is provided with an array of through holes. The array of through holes is formed by M*N through holes arranged in M rows and N columns, where $M\geq1$ and $N\geq1$, M and N are positive integers, each row of through holes in the array of through holes are arranged in an x direction, and each column of through holes in the array of through holes are arranged in a y direction. The x direction and the y direction are intersected with each other and located in the same plane, and a thickness direction of the at least one copper layer is a z direction, which is perpendicular to both the x direction and the y direction.

A thickness of the at least one copper layer is expressed as h, a largest distance between a center point of a through hole and an edge of the through hole is defined as a major semi-axis, having a length expressed as a; and a shortest distance between the center point of the through hole and the edge of the through hole is defined as a minor semi-axis, having a length expressed as b. The shortest vertical distance in the x direction between adjacent through holes is expressed as A, and the shortest vertical distance in a Y direction between adjacent through holes is expressed as B, and the Y direction is perpendicular to the x direction. A surface area of the copper layer covered by the array of through holes is an array area, and a surface area of the copper layer not covered by the array of through holes is a non-array area. The weight per square meter of the array area is denoted as m as follows:

$$m = k * 8.96 * 10^6 * h * \left[1 - \frac{\pi ab}{(2a+A)*(2b+B)}\right],$$

where k is any value between 0.9 and 1.1.

After coating a negative electrode material on the electrolytic copper foil, the through holes can be filled with the negative electrode material, thus improving the peel resistance of the negative electrode material on the copper foil. A through-hole structure of copper foil facilitates improvement of the wettability of an electrolyte on an electrode surface, thus improving the transmission efficiency of lithium ions. Especially in solid-state batteries, when the electrolytic copper foil described above is used as a current collector of a negative electrode, it can not only collect current, but also form a good interface in the solid-state electrolyte, thus effectively transmitting the current. Good interface characteristics can reduce energy loss of the battery during charging and discharging, improve energy density, and prolong the cycle life of the battery. In addition, the electrolytic copper foil described above can also reduce the internal impedance of the battery and further improve the charging and discharging performance of the battery. Compared with the traditional copper foil, the weight of the electrolytic copper foil in the present disclosure can be reduced (by up to 20%) under the same specification and size, which can reduce the weight ratio of the copper foil in a battery module and improve the energy density of the battery. The electrolytic copper foil in the present disclosure can also reduce aging time and electrolyte consumption of the battery, and improve the safety of the battery.

The array of through holes indicates that the center points of the through hole structure are distributed in an array. In some embodiments, through holes in the array of through holes are circular and/or elliptical. For circular through holes, their center points are arranged in an array, and in fact, the circular through holes are also arranged in an array, and the

arrangements of the center points and the circular through holes are consistent with each other. For elliptical through holes, rotation about the center points may result in different orientations of the major and/or minor axes, so that, in terms of their axial directions, the through holes may not appear to be arranged in an array. Therefore, the array of through holes in this disclosure is defined on the basis of an arrangement of the center points.

In some embodiments, the array of through holes is arranged in a rectangular array. As shown in FIG. 1, the array of through holes is arranged in a rectangular array, and the x direction is perpendicular to the y direction. In this embodiment, the Y direction is the same as the y direction. The largest distance between a center point of a through hole and an edge of the through hole is defined as a major semi-axis, having a length expressed as a; and the shortest distance between the center point of the through hole and the edge of the through hole is defined as a minor semi-axis, having a length expressed as b. The shortest vertical distance in the x direction between adjacent through holes is expressed as A, and the shortest vertical distance in the Y direction between adjacent through holes is expressed as B. The electrolytic copper foil with through holes arranged in a rectangular array has almost the same areal density per unit area in different areas. When the electrolytic copper foil is stretched by a winding tension, the stress distribution is uniform, and the array area is not easy to deform or wrinkle.

In some embodiments, the array of through holes is arranged in a diamond array. As shown in FIG. 2, the array of through holes is arranged in the diamond array, the x direction intersects the y direction at an angle but not perpendicularly, and the x direction is perpendicular to the Y direction. In this embodiment, the Y direction is different from the y direction. The largest distance between a center point of a through hole and an edge of the through hole is defined as a major semi-axis, having a length expressed as a; and the shortest distance between the center point of the through hole and the edge of the through hole is defined as a minor semi-axis, having a length expressed as b. The shortest vertical distance in the x direction between adjacent through holes is expressed as A, and the shortest vertical distance in the Y direction between adjacent through holes is expressed as B.

In some embodiments, A is 200 μm to 2000 μm and can be any value therebetween or can be in a range between any two numerical values between 200 μm and 2000 μm, such as 500 μm, 600 μm, 700 μm, 800 μm, 1000 μm, 1200 μm, 1400 μm, 1600 μm, 1800 μm, and further, A optionally can be 400 μm to 1500 μm.

In some embodiments, B is 200 μm to 2000 μm and can be any value therebetween or can be in a range between any two numerical values between 200 μm and 2000 μm, such as 500 μm, 600 μm, 700 μm, 800 μm, 1000 μm, 1200 μm, 1400 μm, 1600 μm, 1800 μm, and further, B optionally can be 400 μm to 1500 μm.

In some embodiments, a is 100 μm to 1500 μm and can be any value therebetween or can be in a range between any two numerical values between 100 μm and 1500 μm, such as 200 μm, 300 μm, 400 μm, 500 μm, 600 μm, 700 μm, 800 μm, 900 μm, 1000 μm, 1100 μm, 1200 μm, 1300 μm, and 1400 μm, and further, a optionally can be 200 μm to 1000 μm.

In some embodiments, b is 100 μm to 1500 μm and can be any value therebetween or can be in a range between any two numerical values between 100 μm and 1500 μm, such as 200 μm, 300 μm, 400 μm, 500 μm, 600 μm, 700 μm, 800 μm, 900 μm, 1000 μm, 1100 μm, 1200 μm, 1300 μm and 1400 μm, and further, b optionally can be 200 μm to 1000 μm.

It needs to be further explained that the array area includes through holes and an area of the copper layer between adjacent through holes, while the non-array area involves the remaining areas of the copper layer.

In some embodiments, porosity of the array area is 5% to 50% and can be any value therebetween or can be in a range between any two numerical values between 5% and 50%, for example, 10%, 15%, 20%, 25%, 30%, 35%, 40%, and 45%, and further can be 10 to 40%.

The porosity of the array area is defined as a ratio of the area of through holes of the copper layer in a unit area to the unit area. When the porosity of the array area is within the above range, better performance of the electrolytic copper foil as a negative current collector can be obtained. When the porosity is more than 50%, the through holes are densely distributed on the copper layer, and the spacing between adjacent through holes is small, and thus the electrolytic copper foil is prone to creasing or fracture during the winding process. When the porosity is less than 5% and the electrolytic copper foil serves as the negative current collector, adhesion between the negative active material and the electrolytic copper foil is relatively poor and easy to peel off, which results in a poor application effect of the electrolytic copper foil when used in batteries.

The thickness of the copper layer has a meaning well known in the art, and can be measured by methods well known in the art. For example, a weighing method is adopted to obtain the areal density of the copper layer, and then the thickness of the copper layer can be deduced from the areal density of the copper layer.

In some embodiments, the thickness of the copper layer is 3 μm to 15 μm and can be any value therebetween or can be in a range between any two numerical values between 3 μm and 15 μm. It is understood that the thickness of the copper layer can be 3 μm, 4 μm, 5 μm, 6 μm, 7 μm, 8 μm, 9 μm, 10 μm, 11 μm, or 12 μm. The thickness of the copper layer in this range can further improve the capacity of the battery.

In some embodiments, the at least one copper layer has two surfaces opposite to each other in the thickness direction of the at least one copper layer, namely a first surface and a second surface, and the roughness and/or brightness of the first surface and the second surface are different from each other. It can be understood that the vertical distance between the first surface and the second surface is the thickness of the copper layer.

In some embodiments, the electrolytic copper foil further includes at least one protective layer. Optionally, the at least one protective layer includes a first protective layer and a second protective layer. The first protective layer is arranged on the first surface, and the second protective layer is arranged on the second surface. The provision of the protective layer can effectively reduce oxidation of the surface of the electrolytic copper foil.

In some embodiments, the protective layer includes at least one of chromium, glucose, and nitride.

In some embodiments, the protective layer contains chromium, and further optionally, content of chromium in the at least one protective layer is 20 ppm to 80 ppm and can be any value therebetween or can be in a range between any two numerical values between 20 ppm and 80 ppm, such as 30 ppm, 40 ppm, 50 ppm, 60 ppm, and 70 ppm.

In some embodiments, a thickness of the first protective layer is 100 nm to 300 nm, and/or a thickness of the second protective layer is 100 nm to 300 nm. Understandably, the thickness of the first protective layer can be independently selected from 100 nm to 300 nm and can be any value therebetween or in a range between any two numerical values between 100 nm and 300 nm; for example, it can also be selected from 150 nm, 200 nm, and 250 nm. The thickness of the second protective layer can be independently selected from 100 nm to 300 nm and can be any value therebetween or in a range between any two numerical values between 100 nm and 300 nm; for example, it can also be selected from 150 nm, 200 nm, and 250 nm.

In some embodiments, the tensile strength of the array area of the copper layer at room temperature is 15 $kgf/mm^2$ to 30 $kgf/mm^2$ and can be any value therebetween or can be in a range between any two numerical values between 15 $kgf/mm^2$ and 30 $kgf/mm^2$; for example, it can also be 16 $kgf/mm^2$, 18 $kgf/mm^2$, 20 $kgf/mm^2$, 22 $kgf/mm^2$, 25 $kgf/mm^2$, or 28 $kgf/mm^2$. The room temperature is 25±5°C.

When the tensile strength of the array area is within this range, the electrolytic copper foil has better mechanical strength. When the tensile strength of the array area is less than 15 $kgf/mm^2$, the electrolytic copper foil is easy to fracture under the action of a tensile force, and the electrolytic copper foil is also easy to fracture under the action of pressing in making the negative electrode of the battery. When the tensile strength of the array area is more than 30 $kgf/mm^2$, there are a large number of through holes in the electrolytic copper foil, and thus the effective load-bearing area becomes smaller under an external force, and the electrolytic copper foil is easy to fracture at the edge regions of the through holes.

In some embodiments, the tensile strength of the non-array area of the copper layer at room temperature is 30 $kgf/mm^2$ to 70 $kgf/mm^2$ and can be any value therebetween or can be in a range between any two numerical values between 30 $kgf/mm^2$ and 70 $kgf/mm^2$; for example, it can also be 35 $kgf/mm^2$, 40 $kgf/mm^2$, 45 $kgf/mm^2$, 50 $kgf/mm^2$, 55 $kgf/mm^2$, 60 $kgf/mm^2$, or 65 $kgf/mm^2$. The room temperature is 25±5°C. When the tensile strength of the non-array area is within this range, the electrolytic copper foil has better mechanical strength.

A preparation method of the electrolytic copper foil is provided in a second aspect of the present disclosure, which includes:

placing an anode and a cathode to be plated in an electrolyte solution for electrolysis to obtain the electrolytic copper foil. The cathode is provided with insulating shielding dots arranged in an array.

The above method is a one-step forming method. The so-called one-step forming method refers that during the electrolysis, a porous structure is generated in a corresponding area of the copper foil without post-treatment processing. In existing mature electrolytic copper foil production processes, the copper foil is generally non-porous copper foil. In order to realize porous copper foil, it is necessary to carry out post-processing on the non-porous copper foil, such as mechanical punching, chemical etching, electrochemical etching, laser perforation, etc., which cannot be formed in one step.

The principle of the above method is as follows. In an electrolysis system, a cathode roller serves as the cathode, and electrons flow along the surface of the cathode roller. Copper ions in the electrolyte migrate to the surface of the cathode roller under the combined action of the electric field between the anode and the cathode and the flow of the electrolyte. Electrons flowing on the surface of the cathode roller are transferred to copper ions close to the cathode roller, and copper ions obtain an electron to form cuprous ions, and the cuprous ions continue to obtain an electron from the surface of the cathode roller to form copper atoms. Finally, the copper atoms are fixed on the surface of the cathode roller and gradually accumulate to form a copper foil with a certain thickness. Therefore, the portion of the cathode roller immersed in the electrolyte can be completely covered by the electrolytic copper foil. The insulating shielding dots are made of a polymer material with high volume resistivity, which has excellent electrical insulation performance, and can isolate a charged part from an uncharged part, so that a current can act in a designated region. The insulating shielding dots are prepared on the surface of the cathode roller. During the electrolysis, although electrons pass through a shielded region of the cathode roller, the electrons in this region can't be accepted by copper ions in the electrolyte because the surface is covered by the insulating shielding dots, and the electrons have to migrate or flow to an electrically insulated region to react with copper ions to form the copper foil. Therefore, copper foil cannot be generated through electrolysis at the electrically insulated region, and finally, the through holes are formed in the copper foil.

In some embodiments, the insulating shielding dots are made of an organic polymer material with volume resistivity greater than $10^9 \Omega \cdot cm$. Without particular limitation, materials of the insulating shielding dots include but are not limited to ultraviolet curing materials, thermosetting materials, and moisture curing materials. These materials exist in a liquid form in an initial state, and change from liquid to solid after ultraviolet curing, thermal curing, or moisture curing. Violet

light-curing materials have acrylate groups and/or epoxy groups. Under irradiation of ultraviolet light with a certain energy density, a reaction occurs between the acrylate groups or the epoxy groups to form a three-dimensional network polymer material. Thermosetting materials are three-dimensional network polymer materials formed by active groups under the action of an initiator or crosslinking at high temperature. The moisture curing materials are three-dimensional network polymer materials formed by active functional groups in the materials, capturing water molecules in the air for condensation polymerization.

The distribution of the insulating shielding dots on the cathode roller is the same as that of the array of through holes on the electrolytic copper foil.

The insulating shielding dots can be prepared by using a template method or a direct forming method. The template method adopts an adhesive tape for preparation, in which the adhesive tape is punched according to arrangement of a required array of through holes, then the adhesive tape is adhered to the surface of the cathode roller, afterwards, the shielding materials are coated to fill the through holes of the adhesive tape, the adhesive tape is removed after the shielding materials are coated, and the shielding materials inside the through holes of the adhesive tape remains on the surface of the cathode roller, and finally the shielding materials are solidified to complete preparation of the insulating shielding dots. The direct forming method is to use an automatic device to prepare the insulating shielding dots directly on the surface of the cathode roller by setting an automatic program for automatic dispensing, and the shielding materials can be solidified during the automatic dispensing.

In some embodiments, a concentration of copper ions in the electrolyte solution is 70 g/L to 130 g/L/ and can be any value therebetween or can be in a range between any two numerical values between 70 g/L and 130 g/L, for example, it can also be 75 g/L, 80 g/L, 85 g/L, 90 g/L, 95 g/L, 100 g/L, 110 g/L, and 120 g/L. When the concentration of the copper ions is within this range, the electrolysis can be carried out at high current density, and the electrolysis efficiency can be improved. When the concentration of the copper ions is too high, copper sulfate is easy to precipitate, and when the concentration of the copper ions is too low, the conductivity of the electrolyte is low, thus with reduced current density, resulting in low electrolysis efficiency.

In a process of preparing the electrolyte solution, a source of the copper ions can be metallic copper, such as copper wires and copper plates, and further, the metallic copper can be dissolved in a sulfuric acid solution to form a sulfuric acid-copper sulfate solution.

In some embodiments, a concentration of sulfuric acid in the electrolyte solution is 80 g/L to 150 g/L and can be any value therebetween or can be in a range between any two numerical values between 80 g/L and 150 g/L, for example, it can also be 90 g/L, 100 g/L, 110 g/L, 120 g/L, 130 g/L, or 140 g/L. A high concentration above 150 g/L of sulfuric acid may increase corrosion to equipment, which may shorten the service life of the equipment, while the solubility of copper sulfate in the electrolyte solution may decrease, and it is easy to crystallize at an edge region of an electrolytic cell and even in pipelines, resulting in blockage. When the concentration of the sulfuric acid is lower than 80 g/L, the electrolysis efficiency is affected. When the concentration of the sulfuric acid is within this appropriate range, electroplating is facilitated.

In some embodiments, a mass concentration of halogen ions (including chloride ions, bromide ions, iodine ions, etc.) in the electrolyte solution is 15 mg/L to 50 mg/L and can be any value therebetween or can be in a range between any two numerical values between 15 g/L and 50 g/L, for example, it can also be 20 mg/L, 25 mg/L, 30 mg/L, 35 mg/L, 40 mg/L and 45 mg/L. Under a low pH condition (for example, an acidic condition) for copper plating, chloride ions can be adsorbed on the cathode copper with high coverage, with a preferred adsorption surface being (111) surface. In a process of thickening the copper layer, the chloride ions can continue to move to surface positions, and adsorbed $Cl^-$ may not hinder deposition of copper, and even can attract copper ions and serve as a channel for electron transfer. In a process of electrodeposition, the chloride ions can be adsorbed on a specific surface for crystal growth, which may affect crystal growth behavior and crystal properties, resulting in a change in surface morphology and facilitating grain refinement. In addition, under the action of reduction at the cathode, the chloride ions are easy to coordinate with $Cu^+$ to form CuCl, and CuCl has different effects at different potentials. Generally, when a potential is relatively positive, although coordination between $Cl^-$ and $Cu^+$ can promote transformation of $Cu^{2+}/Cu^+$, an insoluble CuCl passivation film can be formed on the surface of the cathode, which may in turn inhibit transformation of $Cu^+/Cu$, thus exhibiting a strong inhibitory effect on copper electrodeposition. When the potential is negative, the passivation film is dissolved rapidly, and the chlorine bridge effect of a $Cu^+$-$Cl^-$ complex is strengthened, which catalyzes further electro-reduction deposition of $Cu^+/Cu$. At this time, the chloride ions act as a promoter of electrodeposition.

In a process of preparing electrolyte, a source of the halogen ions can be HX, NaX, or KX, where X is a halogen ion.

In some embodiments, a concentration of the organic additive in the electrolyte solution is 20 mg/L to 500 mg/L and can be any value therebetween or can be in a range between any two numerical values between 20 mg/L and 500 mg/L, for example, it can also be 40mg/L, 50 mg/L, 60 mg/L, 70 mg/L, 80 mg/L, 90 mg/L, 100 mg/L, 110 mg/L, 120 mg/L, 130 mg/L, or 140 mg/L. When the chloride ions are used as an additive alone, the properties of the prepared copper foil are unstable. The chloride ions can cooperate with other organic additives to function as a chlorine bridge. For example, a $Cu^+$-$Cl^-$ ligand formed by the chloride ions can provide a binding site for the adsorption of ether bonds in the polyether

compound, and may have an electrostatic interaction with positively charged nitrogen-containing compounds because of being negatively charged, which makes it easy to form an adsorption barrier layer on the surface of the cathode. As another example, the chloride ions can combine with organic sulfides and copper ions to form bridges, which can accelerate the transport of substances and improve the deposition rate of $Cu^{2+}$. When the concentration of the chloride ions is too low, the synergistic effect with the organic additive is weak, which is unfavorable for improving the mechanical strength of the copper foil; and when the concentration of the chloride ions is too high, nodular copper particles may appear on the surface of the copper foil, which affects the performance of the products.

In some embodiments, the organic additive includes a leveling agent, a brightener, and a wetting agent.

In some embodiments, the leveling agent is a nitrogen-containing compound, optionally including one or more of collagen, gelatin, thiourea, allyl thiourea, ethylene thiourea, and 2-amino-4-methylbenzothiazole. A mass concentration of the leveling agent in the electrolyte solution is not limited to 0.1 mg/L, 10 mg/L, 20 mg/L, 30 mg/L, and 40 mg/L. The leveling agent can improve the tensile strength and the elongation of the electrolytic copper foil.

In some embodiments, the brightener is an organic bivalent sulfide, and optionally includes one or more of bis-(sodium sulfopropyl)-disulfide (SPS), N,N-dimethyldithioformamide propylsolfonic acid sodium (DPS), sodium 3-mercaptopropane sulfonate (MPS), sodium 3-(benzothiazol-2-ylthio)-1-propanesulfonate (ZPS), and isothiourea-propane sulfonate (UPS). A mass concentration of the brightener in the electrolyte solution is not limited to 0.1 mg/L, 10 mg/L, 20mg/L, 30 mg/L, 40 mg/L, 100mg/L, 200 mg/L, 300mg/L, and 400 mg/L.

In some embodiments, the wetting agent is a polyether compound, optionally including one or more of polyethylene glycol, hydroxyethyl cellulose, polypropylene glycol, allyl polyethylene glycol, and fatty amine polyoxyethylene ether. A mass concentration of the wetting agent in the electrolyte solution is not limited to 1 mg/L, 10 mg/L, 20mg/L, 30 mg/L, and 40 mg/L. The wetting agent can improve the leveling and wettability of a copper deposit layer, increase the dispersion ability of the copper ions, eliminate pinholes of a plated copper layer, and make grains of the plated layer uniform, fine, and compact.

In some embodiments, the temperature of the electrolyte solution during electrolysis is 45°C to 60°C.

In some embodiments, a flow rate of the electrolyte solution is 30 $m^3$/h to 60 $m^3$/h during the electrolysis.

In some embodiments, the anode is a titanium plate, and a surface of the titanium plate contains an iridium tantalum coating.

In some embodiments, the cathode is a cathode roller, and is optionally made of high-purity titanium.

In some embodiments, the method further includes a step of passivating the electrolytic copper foil in a passivation solution. Optionally, the passivation solution contains one or more of a chromium source, glucose, and nitride.

Further, in some embodiments, the method further includes one or more of the steps of peeling the plated copper layer from the cathode, washing with water, drying, and winding.

In addition, the secondary battery and the electric device according to the present disclosure will be described below as appropriate.

Normally, the secondary battery includes a positive electrode plate, a negative electrode plate, an electrolyte, and a separator. In the process of charging and discharging the battery, active ions shuttle between the positive electrode plate and the negative electrode plate, being repeatedly intercalated into and deintercalated from them. The electrolyte functions in conducting ions between the positive electrode plate and the negative electrode plate. The separator is arranged between the positive electrode plate and the negative electrode plate, which mainly functions in preventing a short circuit between the positive electrode plate and the negative electrode plate while allowing ions to pass through.

Positive electrode plate

The positive electrode plate includes a positive current collector and a positive active material layer provided on at least one surface of the positive current collector, and the positive active material layer includes a positive active material. For example, the positive current collector has two surfaces opposite to each other in a thickness direction of the positive current collector, and the positive active material layer is disposed on one or both of the two surfaces of the positive current collector.

In some embodiments, the positive current collector can be a metal foil or a composite current collector. For example, when the positive current collector is the metal foil, an aluminum foil can be used. The composite current collector may include a polymer base layer and a metal layer formed on at least one surface of the polymer base layer. The composite current collector can be obtained by forming a metal material on a polymer base. In the positive current collector, non-limiting examples of the metal material may include aluminum, aluminum alloy, nickel, nickel alloy, titanium, titanium alloy, silver, silver alloy, and the like. In the positive current collector, non-limiting examples of the polymer base may include polypropylene (PP), polyethylene terephthalate (PET), polybutylene terephthalate (PBT), polystyrene (PS), polyethylene (PE), etc.

In some embodiments, the positive active material can be a positive active material well known in the art for batteries.

It should be noted that the secondary battery of the present disclosure can be a lithium-ion battery or a sodium-ion battery.

As a non-limiting example of a lithium-ion battery, the positive active material may include one or more of the following materials: lithium-containing phosphate with an olivine structure, lithium transition metal oxide, and their respective modified compounds. However, the present disclosure is not limited to these materials, but also uses other conventional materials that can be used as positive active materials of the battery. One of these positive active materials may be used alone, or two or more of them may be used in combination. Examples of the lithium transition metal oxide may include, but are not limited to, lithium cobalt oxide (such as $LiCoO_2$), lithium nickel oxide, lithium manganese oxide, lithium nickel cobalt oxide, lithium nickel manganese oxide, lithium nickel cobalt manganese oxide, lithium nickel cobalt aluminum oxide, and modified compounds thereof. Non-limiting examples of the lithium-containing phosphate with the olivine structure may include, but are not limited to, lithium iron phosphate, composite materials of lithium iron phosphate and carbon, lithium manganese phosphate, composite materials of lithium manganese phosphate and carbon, lithium manganese iron phosphate, and composite materials of lithium manganese iron phosphate and carbon. Non-limiting examples of the lithium cobalt oxide may include $LiCoO_2$; non-limiting examples of the lithium nickel oxide may include $LiNiO_2$; non-limiting examples of lithium manganese oxide may include $LiMnO_2$, $LiMn_2O_4$ and the like; non-limiting examples of the lithium nickel cobalt manganese oxide may include $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), and $LiNi_{0.8}Co_{0.1}Mn_{0.1}O_2$ (also abbreviated as $NCM_{811}$). Non-limiting examples of lithium nickel cobalt aluminum oxide may include $LiNi_{0.8}Co_{0.15}Al_{0.05}O_2$.

A positive active material of the sodium-ion battery may include at least one or more of the following: sodium transition metal oxide, polyanionic compounds, and Prussian blue analogs. However, the present disclosure is not limited to these materials, and other conventional known materials that can be used as a positive active material of the sodium-ion battery can also be used.

As an optional technical scheme, in the sodium transition metal oxide, transition metal can include at least one or more of Mn, Fe, Ni, Co, Cr, Cu, Ti, Zn, V, Zr, and Ce. A non-limiting example of the sodium transition metal oxide may be NaxMO2, where M is one or more of Ti, V, Mn, Co, Ni, Fe, Cr, and Cu, and $0 < x \leq 1$.

As a non-limiting example of the sodium-ion battery, the positive active material may include one or more of the following: sodium transition metal oxide, polyanionic compounds, and Prussian blue analogs. However, the present disclosure is not limited to these materials, and other conventional known materials that can be used as a positive active material of the sodium-ion battery can also be used.

In some embodiments, the positive active material layer also optionally includes a binder. As a non-limiting example, the binder may include one or more of polyvinylidene difluoride (PVDF), polytetrafluoroethylene (PTFE), vinylidene difluoride-tetrafluoroethylene-propylene terpolymer, vinylidene difluoride-hexafluoropropylene-tetrafluoroethylene terpolymer, tetrafluoroethylene-hexafluoropropylene copolymer, and fluorine-containing acrylate resin.

In some embodiments, the positive active material layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode plate can be prepared in the following manner: above components for preparing the positive electrode plate, such as the positive active material, the conductive agent, the binder and any other components, are dispersed in a solvent to form a positive electrode slurry; and the positive electrode slurry is coated on at least one surface of the positive current collector, followed by processes such as drying and cold pressing to obtain the positive electrode plate. Types of the solvent can be selected from, but not limited to, any of the above embodiments, such as N-methylpyrrolidone (NMP). The positive electrode slurry can be coated on a single surface of the positive current collector or both surfaces of the positive current collector. A solid content of the positive electrode slurry can be 40wt% to 80wt%. Viscosity of the positive electrode slurry at room temperature can be adjusted to 5000 mPa·s to 25000 mPa·s. When coating the positive electrode slurry, a coating areal density can be 15 $mg/cm^2$ to 35 $mg/cm^2$, expressed on a dry weight basis (excluding solvent). Compaction density of the positive electrode plate can be 3.0 $g/cm^3$ to 3.6 $g/cm^3$, optionally 3.3 $g/cm^3$ to 3.5 $g/cm^3$.

Negative electrode plate

The negative electrode plate includes a negative current collector and a negative active material layer provided on at least one surface of the negative current collector, and the negative active material layer includes a negative active material. For example, the negative current collector has two surfaces opposite to each other in a thickness direction of the negative current collector, and the negative active material layer is disposed on one or both of the two surfaces of the negative current collector.

In this disclosure, the negative current collector adopts the electrolytic copper foil in the first aspect of this disclosure or the electrolytic copper foil prepared by the method in the second aspect of this disclosure. In some

embodiments, the negative active material can be a negative active material well known in the art for batteries. As a non-limiting example, the negative electrode active material may include one or more of the following: artificial graphite, natural graphite, soft carbon, hard carbon, a silicon-based material, a tin-based material, lithium titanate, and the like. The silicon-based material can include one or more of silicon, a silicon-oxygen compound, a silicon-carbon composite, a silicon-nitrogen composite, and silicon alloy. The tin-based material may include at least one of tin, a tin-oxygen compound, and a tin alloy. However, the present disclosure is not limited to these materials, but also uses other conventional materials that can be used as negative active materials of the battery. One of these negative active materials may be used alone, or two or more of them may be used in combination. In other embodiments, the negative active material is metallic lithium or a lithium alloy, such as lithium foil. Compared with conventional copper foil, the electrolytic copper foil of the disclosure, as the negative current collector, can greatly enhance adhesion with the lithium foil.

In some embodiments, the negative active material layer also optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative active material layer further optionally includes a conductive agent. The conductive agent may include one or more of superconducting carbon, acetylene black, carbon black, Ketjen black, carbon dots, carbon nanotubes, graphene, and carbon nanofibers.

In some embodiments, the negative active material layer further optionally includes other promoters such as a thickener (for example, sodium carboxymethyl cellulose (CMC-Na)).

In some embodiments, the negative electrode plate may be prepared in the following manner: above components for preparing the negative electrode plate, such as the negative active material, the conductive agent, the binder and any other components, are dispersed in a solvent (as a non-limiting example of the solvent, such as deionized water) to form a negative electrode slurry; and the negative electrode slurry is coated on at least one surface of the negative current collector, followed by processes such as drying and cold pressing to obtain the negative electrode plate. The negative electrode slurry can be coated on a single surface of the negative current collector or both surfaces of the negative current collector. A solid content of the negative electrode slurry can be 40wt% to 60wt%. Viscosity of the negative electrode slurry at room temperature can be adjusted to 2000 mPa·s to 10000 mPa·s. When coating the negative electrode slurry, a coating areal density can be 75 mg/cm$^2$ to 220 g/cm$^2$, expressed on a dry weight basis (excluding solvent). The compaction density of the negative electrode plate can be 1.0 g/cm$^3$ to 1.8 g/cm$^3$.

Electrolyte

The electrolyte conducts ions between the positive electrode plate and the negative electrode plate. The electrolyte is not specifically limited to any particular type in this disclosure, and may be selected as desired. For example, the electrolyte may be in a liquid state, a gel state, or an all-solid state, and the electrolytic copper foil of the disclosure is especially suitable for batteries with an all-solid electrolyte.

In some embodiments, the electrolyte is an electrolyte solution. The electrolyte solution includes an electrolyte salt and a solvent.

In some embodiments, the electrolytic salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulphonyl)imide (LiTFSI), lithium trifluoromethanesulfonate (LiTFS), lithium difluorophosphate ($LiPO_2F_2$), lithium difluoro(oxalato)borate (LiDFOB), lithium bis(oxalate)borate (LiBOB), lithium difluoro(bisoxalato)phosphate (LiDFOP), and lithium tetrafluoro(oxalate)phosphate (LiTFOP).

In some embodiments, the solvent may include one or more of ethylene carbonate (EC,

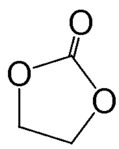

),

propylene carbonate (PC,

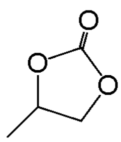

),

ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate

( 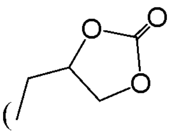 ),

fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone (gamma butyrolactone), sulfolane, dimethyl sulfone, ethyl methylsulfonate, and diethyl sulfone.

In some embodiments, the electrolyte solution further optionally includes an additive. For example, the additive may include a negative electrode film-forming additive and a positive electrode film-forming additive, and may further include an additive capable of improving some performance of the battery, for example, an additive for improving overcharge performance of the battery and an additive for improving high-temperature performance, low-temperature performance of the battery or the like.

In some embodiments, the additive in the electrolyte may include, but is not limited to, one or more of fluoroethylene carbonate (FEC), di-fluoroethylene carbonate (DFEC), trifluoropropylene carbonate (TFPC), and the like.

Separator

In some embodiments, the secondary battery further includes a separator. In this disclosure, the separator is not specifically limited to any particular type, and any known porous-structure separator with good chemical stability and mechanical stability can be selected.

In some embodiments, a material of the separator may include at least one of glass fiber, non-woven fabric, polyethylene, polypropylene, and polyvinylidene difluoride. The separator may be a single-layer film or a multi-layer composite film, which is not specifically limited. When the separator is a multi-layer composite film, respective layers may be made of the same or different materials, which is not specifically limited.

In some embodiments, a thickness of the separator is 6 μm to 40 μm, optionally 12 μm to 20 μm.

In some embodiments, the positive electrode plate, the negative electrode plate, and the separator may be wound or laminated to form an electrode assembly.

In some embodiments, the secondary battery may include an outer package. The outer package may be used to package the electrode assembly and the electrolyte.

In some embodiments, the outer package of the secondary battery may be a hard shell, for example, a hard plastic shell, an aluminum shell, or a steel shell. The outer package of the secondary battery may alternatively be a soft bag, for example, a soft pouch. A material of the soft bag may be plastic, and further, a non-limiting example of the plastic may be one or more of polypropylene, polybutylene terephthalate, and polybutylene succinate.

The secondary battery includes at least one battery cell. The secondary battery may include one or more battery cells.

In this disclosure, unless otherwise specified, the expression "battery cell" refers to a basic unit that can realize the mutual conversion of chemical energy and electric energy, and further, it generally includes at least a positive electrode plate, a negative electrode plate, and an electrolyte. In the process of charging and discharging the battery, active ions shuttle between the positive electrode plate and the negative electrode plate, being repeatedly intercalated into and deintercalated from them. The electrolyte functions in conducting active ions between the positive electrode plate and the negative electrode plate.

The shape of the battery cell is not particularly limited in this disclosure, and it can be cylindrical, square, or any other shape.

In some embodiments, the outer package may include a housing and a cover plate. The housing can include a bottom plate and a side plate connected to the bottom plate, and the bottom plate and the side plate form an accommodating cavity. The housing has an opening communicated with the accommodating cavity, and the cover plate can cover the opening to close the accommodating cavity. The positive electrode plate, the negative electrode plate, and the separator can be wound or laminated to form an electrode assembly. The electrode assembly is placed in the accommodating cavity. The electrolyte solution immerses the electrode assembly. A battery cell can contain one or more electrode assemblies, which can be selected by those skilled in the art according to actual needs.

The secondary battery may be a battery module or a battery pack.

The battery module includes at least one battery cell. The battery module can contain one or more battery cells, and an appropriate number can be selected by those skilled in the art according to the application and capacity of the battery module.

In some embodiments, the battery module can also be assembled into a battery pack, and the battery pack can contain one or more battery modules, and an appropriate number can be selected by those skilled in the art according to the application and capacity of the battery pack.
In addition, an electric device is further provided in the present disclosure, which includes the secondary battery according to the present disclosure. The secondary battery can be used as a power source for an electric device or as an energy storage unit of the electric device. The electric device can include a mobile device, an electric vehicle, an electric train, a ship, satellites, an energy storage system, etc., which is not limited thereto. The mobile device can be, for example, a mobile phone, a notebook computer, etc. The electric vehicle can be, for example, a battery electric vehicle, a hybrid electric vehicle, a plug-in hybrid electric vehicle, an electric bicycle, an electric scooter, an electric golf vehicle, or an electric truck, etc., which is not limited thereto.
For the electric device, the secondary battery can be selected according to its use requirements.
For example, the electric device may be a battery electric vehicle, a hybrid electric vehicle, or a plug-in hybrid electric vehicle. In order to meet the requirements of the electric device for high power and high energy density of the secondary battery, a battery pack or a battery module can be adopted.
As another example, the electric device may be a mobile phone, a tablet computer, a notebook computer, etc. This device is usually required to be light and thin, and the secondary battery may be used as a power source.

## Embodiments

Embodiments of the present disclosure will be described in the following. The embodiments described below are exemplary and are only used to explain the present disclosure, and should not be construed as limiting the present disclosure. For parts of the embodiments which are not specified in terms of technology or conditions, they are carried out according to technology or conditions described in the literature in this art or according to the product specification. For reagents or instruments used which are not specified in terms of manufacturer, they are all conventional products commercially available on the market.

### Embodiment 1

1) Preparing cathode insulating shielding dots

The insulating shielding dots in the rectangular array were prepared on the surface of the rotating cathode roller by a direct forming method. The insulating shielding dots were circular, specifically, a=b=160 μm and A=B=500 μm, and the electrical insulation material was an ultraviolet curing material.

2) Electrolysis

Copper wires with a copper content of 99.99% were dissolved in sulfuric acid to form a sulfuric acid-copper sulfate solution, then the organic additive and hydrochloric acid were added and stirred evenly to obtain an initial electrolyte solution, and the electrolyte solution was filtered by a filter with filtration accuracy less than 0.5 μm to obtain a pure electrolyte solution, a cathode roller was adopted as the cathode, a titanium plate with a surface being an iridium and tantalum coating was adopted as the anode, the anode and the cathode were separated by the electrolyte solution, and a distance between the cathode and the anode was 8 mm.
In the electrolyte solution, a concentration of the sulfuric acid was 115 g/L, a concentration of copper ions was 85 g/L, a concentration of chloride ions was 20 mg/L, a concentration of bis-(sodium sulfopropyl)-disulfide was 12 mg/L, a concentration of isothiourea-propane sulfonate was 4 mg/L, a concentration of polyethylene glycol (with a molecular weight of 4000 to 6000) was 15 mg/L, a concentration of collagen was 5 mg/L, and a current density was 7000 $A/m^2$. A porous copper foil with a thickness of 6 μm was prepared, with a temperature of the electrolyte solution of 50°C and a flow rate of the electrolyte solution of 40 $m^3/h$.
The cathode roller rotated at a constant speed, and copper in the solution was deposited on the surface of the cathode roller to form a copper foil. The thickness of the copper foil was controlled by the cathode current density and the rotating speed of the cathode roller. A copper foil with a target thickness was obtained by those skilled in the art by controlling the current density and the rotating speed of the cathode roller in conventional methods. The copper foil was continuously peeled from the cathode roller after the copper foil was rolled out of the electrolyte solution with a drum, which was then subjected to washing, passivation, drying, and winding to generate the electrolytic copper foil.
A SEM image of an array area of the electrolytic copper foil prepared in this embodiment is shown in FIG. 3, and a wound finished product of the electrolytic copper foil is shown in FIG. 4.

### Embodiment 2

1) Preparing cathode insulating shielding dots

The insulating shielding dots in the rectangular array were prepared on the surface of the rotating cathode roller by a direct forming method. The insulating shielding dots were circular, specifically, a=b=300 μm and A=B=800 μm, and the electrical insulation material was an ultraviolet curing material.

2) Electrolysis

Copper wires with a copper content of 99.99% were dissolved in sulfuric acid to form a sulfuric acid-copper sulfate solution, then the organic additive and hydrochloric acid were added and stirred evenly to obtain an initial electrolyte solution, and the electrolyte solution was filtered by a filter with filtration accuracy less than 0.5 μm to obtain a pure electrolyte solution, a cathode roller was adopted as the cathode, a titanium plate with a surface being an iridium and tantalum coating was adopted as the anode, the anode and the cathode were separated by the electrolyte solution, and a distance between the cathode and the anode was 8 mm.

In the electrolyte solution, a concentration of the sulfuric acid was 110 g/L, a concentration of copper ions was 90 g/L, a concentration of chloride ions was 25 mg/L, a concentration of bis-(sodium sulfopropyl)-disulfide was 30 mg/L, a concentration of sodium 3-(benzothiazol-2-ylthio)-1-propanesulfonate was 15 mg/L, a concentration of polyethylene glycol (with a molecular weight of 4000 to 6000) was 9 mg/L, a concentration of hydroxyethyl cellulose was 4 mg/L, a concentration of thiourea was 3 mg/L, and a current density was 6500 A/$m^2$. A porous copper foil with a thickness of 6 μm was prepared, with a temperature of the electrolyte solution of 53°C and a flow rate of the electrolyte solution of 45 $m^3$/h.

The cathode roller rotated at a constant speed, and copper in the solution was deposited on the surface of the cathode roller to form a copper foil. The thickness of the copper foil was controlled by the cathode current density and the rotating speed of the cathode roller. A copper foil with a target thickness was obtained by those skilled in the art by controlling the current density and the rotating speed of the cathode roller in conventional methods. The copper foil was continuously peeled from the cathode roller after the copper foil was rolled out of the electrolyte solution with a drum, which was then subjected to washing, passivation, drying, and winding to generate the electrolytic copper foil.

Embodiment 3

1) Preparing cathode insulating shielding dots

The insulating shielding dots in the rectangular array were prepared on the surface of the rotating cathode roller by a direct forming method. The insulating shielding dots were circular, specifically, a=b=400 μm and A=B=1000 μm, and the electrical insulation material was an ultraviolet curing material.

2) Electrolysis

Copper wires with a copper content of 99.99% were dissolved in sulfuric acid to form a sulfuric acid-copper sulfate solution, then the organic additive and hydrochloric acid were added and stirred evenly to obtain an initial electrolyte solution, and the electrolyte solution was filtered by a filter with filtration accuracy less than 0.5 μm to obtain a pure electrolyte solution, a cathode roller was adopted as the cathode, a titanium plate with a surface being an iridium and tantalum coating was adopted as the anode, the anode and the cathode were separated by the electrolyte solution, and a distance between the cathode and the anode was 8 mm.

In the electrolyte solution, a concentration of the sulfuric acid was 110 g/L, a concentration of copper ions was 90 g/L, a concentration of chloride ions was 28 mg/L, a concentration of bis-(sodium sulfopropyl)-disulfide was 45 mg/L, a concentration of N,N-dimethyldithioformamide propylsolfonic acid sodium was 28 mg/L, a concentration of polyethylene glycol (with a molecular weight of 4000 to 6000) was 7 mg/L, a concentration of hydroxyethyl cellulose was 2 mg/L, a concentration of collagen was 1 mg/L, a concentration of 2-amino-4-methylbenzothiazole was 4 mg/L, and a current density was 6500 A/$m^2$. A porous copper foil with a thickness of 6 μm was prepared, with a temperature of the electrolyte solution of 53°C and a flow rate of the electrolyte solution of 45 $m^3$/h.

The cathode roller rotated at a constant speed, and copper in the solution was deposited on the surface of the cathode roller to form a copper foil. The thickness of the copper foil was controlled by the cathode current density and the rotating speed of the cathode roller. A copper foil with a target thickness was obtained by those skilled in the art by controlling the current density and the rotating speed of the cathode roller in conventional methods. The copper foil was continuously peeled from the cathode roller after the copper foil was rolled out of the electrolyte solution with a drum, which was then subjected to washing, passivation, drying, and winding to generate the electrolytic copper foil.

Embodiment 4

1) Preparing cathode insulating shielding dots

The insulating shielding dots in the rectangular array were prepared on the surface of the rotating cathode roller by a template method. The insulating shielding dots were circular, specifically, a=b=500 μm and A=B=1000 μm, and the electrical insulation material was an ultraviolet curing material.

2) Electrolysis

Copper wires with a copper content of 99.99% were dissolved in sulfuric acid to form a sulfuric acid-copper sulfate solution, then the organic additive and hydrochloric acid were added and stirred evenly to obtain an initial electrolyte solution, and the electrolyte solution was filtered by a filter with filtration accuracy less than 0.5 μm to obtain a pure electrolyte solution, a cathode roller was adopted as the cathode, a titanium plate with a surface being an iridium and tantalum coating was adopted as the anode, the anode and the cathode were separated by the electrolyte solution, and a distance between the cathode and the anode was 8 mm.

In the electrolyte solution, a concentration of the sulfuric acid was 105g/L, a concentration of copper ions was 92g/L, a concentration of chloride ions was 28 mg/L, a concentration of sodium 3-mercaptopropane sulfonate was 50 mg/L, a concentration of N,N-dimethyldithioformamide propylsolfonic acid sodium was 20 mg/L, a concentration of polyethylene glycol (with a molecular weight of 4000 to 6000) was 5 mg/L, a concentration of hydroxyethyl cellulose was 6 mg/L, a concentration of collagen was 3mg/L, a concentration of 2-amino-4-methylbenzothiazole was 10 mg/L, and a current density was 7000 $A/m^2$. A porous copper foil with a thickness of 6 μm was prepared, with a temperature of the electrolyte solution of 55°C and a flow rate of the electrolyte solution of 45 $m^3/h$.

The cathode roller rotated at a constant speed, and copper in the solution was deposited on the surface of the cathode roller to form a copper foil. The thickness of the copper foil was controlled by the cathode current density and the rotating speed of the cathode roller. A copper foil with a target thickness was obtained by those skilled in the art by controlling the current density and the rotating speed of the cathode roller in conventional methods. The copper foil was continuously peeled from the cathode roller after the copper foil was rolled out of the electrolyte solution with a drum, which was then subjected to washing, passivation, drying, and winding to generate the electrolytic copper foil.

Embodiment 5

This embodiment is substantially the same as Embodiment 4, except that A=B=800 μm.

Embodiment 6

This embodiment is substantially the same as Embodiment 1, except that a=b=400 μm.

Embodiment 7

This embodiment is substantially the same as Embodiment 3, except that a=b=500 μm, and A=B=500 μm.

Embodiment 8

This embodiment is substantially the same as Embodiment 2, except that a=b=600 μm, and A=B=500 μm.

Comparative Embodiment 1

This embodiment is substantially the same as Embodiment 1, except that the insulating shielding dots were not prepared on the cathode.

Test section

1) Tensile strength and elongation test of electrolytic copper foil

A HY-0230 universal material testing machine manufactured by Shanghai Hengyi Precision Instrument Co., Ltd. was used to test the tensile strength and the elongation of the electrolytic copper foil at a strain rate of 0.8 mm/s and room temperature (at about 25°C) according to the testing method of GB/T29847-2013. The sample used in the tensile strength and elongation test was a strip sample with a total length of 100 mm and a width of 15 mm. The sample was repeatedly measured three times, and their average value was taken as the final tensile strength and elongation of the sample.

2) Coulombic efficiency

Assembly and test of half cell: a model CR2032 button cell battery was assembled for test, and the cell battery was assembled in a glove box protected by argon. Working electrodes employing the electrolytic copper foils prepared in Embodiments 1 to 8, a counter electrode of a lithium sheet, an electrolyte solution and a separator which were commercially available, were assembled together to form half cells. A constant-current charging and discharging test was carried out by using a CT-3008W5V20A-TF high-precision battery performance test system, and the half cells were tested for 200 cycles at a current density of 1 $mA/cm^2$, and then the final coulombic efficiency was calculated.

3) Cycle capacity retention rate 1

Assembly and test of full cell 1: 90 parts by weight of a commercially available silicon-carbon negative active material, 4 parts by weight of a conductive agent, and 6 parts by weight of a binder were mixed in high-purity water to prepare a slurry. Then, the slurry was evenly coated on smooth surfaces of the electrolytic copper foils prepared in Embodiments 1 to 8 by using a coater, followed by drying in an oven, then the slurry was evenly coated on rough surfaces of the electrolytic copper foils prepared in Embodiments 1 to 8 by using a coater, followed by drying in an oven, and then rolling treatment was performed after drying was completed. Then, the obtained negative electrode plates were assembled with a commercially available electrolyte solution (1 mol/L of $LiPF_6$ in EC-DEC (with a volume ratio of 1: 1)), a separator, and a positive electrode plate to manufacture model CR2032 button cell batteries. A CT-3008W5V20A-TF high-precision battery performance testing system was used for a constant-current charging and discharging test. The cell batteries were charged and discharged for 100 cycles at a rate of 1C, and the cycle capacity retention rates of the cells after 100 cycles were tested. The cycle capacity retention rate represents a ratio of battery capacity after a final cycle discharge to battery capacity after the first discharge.

4) Cycle capacity retention rate 2

Assembly and test of full cell 2: in an inert gas, that is, argon, environment, lithium foil with a thickness of 20 μm was respectively placed on smooth surfaces and rough surfaces of the electrolytic copper foils prepared in Embodiments 1 to 8, and the lithium foils and the copper foils were laminated by rolling. Full cells were prepared by assembling the copper-lithium composite foil acting as a negative electrode and a commercial positive electrode plate acting as a positive electrode, with a model of CR2032 and the electrolyte being a sulfide solid electrolyte. A CT-3008W5V20A-TF high-precision battery performance testing system was used for a constant-current charging and discharging test. The cell batteries were charged and discharged for 100 cycles at a rate of 1C, and cycle capacity retention rates of the cells after 100 cycles were tested.

5) Wettability test

90 parts by weight of a commercially available silicon-carbon negative active material, 4 parts by weight of a conductive agent, and 6 parts by weight of a binder were mixed in high-purity water to prepare a slurry. Then, the slurry was evenly coated on smooth surfaces of the electrolytic copper foils prepared in Embodiments 1 to 3 by using a coater, followed by drying in an oven, then the slurry was evenly coated on rough surfaces of the electrolytic copper foils prepared in Embodiments 1 to 3 by using a coater, followed by drying in an oven, and then rolling treatment was performed after drying was completed to obtain electrode plates.

A Data-physics OCA 20 contact angle/surface tension measuring instrument was used to test the wetting behavior of the electrolyte solution on the electrode plates, and a contact angle after the electrolyte solution was dripped on the surface of the electrode plate for 1 s characterized the wetting effect. A smaller contact angle indicates the electrolyte solution can fully wet the electrode plate faster, to make the negative active material fully contact with the electrolyte solution. In the process of using the battery, this provides a fast transportation channel for $Li^+$, and makes intercalation and deintercalation of $Li^+$ in the active material faster.

The above test results are shown in Table 1 below:

Table 1

| | Tensile strength at room temperature ($kgf/mm^2$) | Elongation (%) | Coulombic efficiency (%) | Cycle capacity retention rate 1 (%) | Cycle capacity retention rate 2 (%) | Contact angle (wettability) |
|---|---|---|---|---|---|---|
| Embodiment 1 | 19.7 | 1.16 | 95.6 | 85.2 | 82.6 | 19.8 |
| Embodiment 2 | 21.5 | 1.04 | 96.1 | 86.5 | 84.5 | 17.4 |
| Embodiment 3 | 25.5 | 1.23 | 96.6 | 86.7 | 83.7 | 16.9 |
| Embodiment 4 | 26.1 | 0.97 | 97.4 | 85.9 | 83.4 | 15.3 |
| Embodiment 5 | 20.8 | 0.82 | 98.3 | 86.3 | 85.3 | 13.8 |
| Embodiment 6 | 17.1 | 0.85 | 98.5 | 89.7 | 84.9 | 12.4 |
| Embodiment 7 | 17.3 | 0.79 | 98.7 | 88.3 | 84.2 | 11.5 |
| Embodiment 8 | 16.7 | 0.62 | 97.3 | 90.1 | 85.1 | 9.7 |
| Comparative Embodiment 1 | 35.2 | 9.8 | 85.3 | 62.3 | 17.8 | 23.6 |

The above test results show that the electrolytic copper foil according to the present disclosure can improve the wettability of the electrolyte, and also improve the coulombic efficiency and cycle capacity retention rate of the battery. The coulombic efficiency and the cycle capacity retention rate can characterize adhesion between the negative active material and the copper foil current collector, and the electrolytic copper foil according to the present disclosure is especially suitable for solid-state batteries as a negative current collector.

The above description of various embodiments tends to emphasize differences between respective embodiments, and their same or similar parts can be referred to each other and will not be repeated for brevity.

It should be noted that this disclosure is not limited to the above embodiments. The above embodiments are only examples, and the embodiments that have the same structure and play the same role and effect within the scope of the technical scheme of this disclosure shall all be included in the technical scope of this disclosure. In addition, other embodiments constructed by applying various modifications to the embodiments and combining some constituent elements of the embodiments within the scope not departing from the principle of the present disclosure shall also be included in the scope of the present disclosure.

## Claims

**1.** An electrolytic copper foil, comprising at least one copper layer, wherein at least a part of a surface of the at least one copper layer is provided with an array of through holes, and the array of through holes comprises M*N through holes arranged in M rows and N columns, wherein M≥1 and N≥1, M and N are positive integers, each row of through holes in the array of through holes are arranged in an x direction, and each column of through holes in the array of through holes are arranged in a y direction, the x direction and the y direction are intersected with each other and located in a same plane, and a thickness direction of the at least one copper layer is a z direction which is perpendicular to both the x direction and the y direction;

a thickness of the at least one copper layer is expressed as h; a largest distance between a center point of a through hole and an edge of the through hole is defined as a major semi-axis, having a length expressed as a; a shortest distance between the center point of the through hole and the edge of the through hole is defined as a minor semi-axis, having a length expressed as b; a shortest vertical distance in the x direction between adjacent through holes is expressed as A; a shortest vertical distance in a Y direction between adjacent through holes is expressed as B; the Y direction is perpendicular to the x direction; a surface area of the at least one copper layer covered by the array of through holes is an array area, and a surface area of the at least one copper layer not covered by the array of through holes is a non-array area, a weight per square meter of the array area is denoted as m as follows:

$$m = k * 8.96 * 10^6 * h * \left[1 - \frac{\pi ab}{(2a+A)*(2b+B)}\right],$$

wherein k is in a range of 0.9 and 1.1.

**2.** The electrolytic copper foil according to claim 1, wherein A is 200 μm to 2000 μm, optionally 400 μm to 1500 μm; and/or B is 200 μm to 2000 μm, optionally 400 μm to 1500 μm.

**3.** The electrolytic copper foil according to claim 1, wherein a is 100 μm to 1500 μm, optionally 200 μm to 1000 μm; and/or b is 100 μm to 1500 μm, optionally 200 μm to 1000 μm.

**4.** The electrolytic copper foil according to claim 1, wherein a porosity of the array area is 5% to 50%, optionally 10% to 40%.

**5.** The electrolytic copper foil according to claim 1, wherein the array of through holes is arranged in a rectangular array and/or a diamond array.

**6.** The electrolytic copper foil according to claim 1, wherein the through hole is circular and/or elliptical.

**7.** The electrolytic copper foil according to claim 1, wherein the at least one copper layer has two surfaces opposite to each other in the thickness direction of the at least one copper layer, the two surfaces are a first surface and a second surface respectively, and a roughness and/or brightness of the first surface and the second surface are different from each other.

**8.** The electrolytic copper foil according to claim 1, wherein the thickness of the at least one copper layer is 3 μm to 15 μm.

**9.** The electrolytic copper foil according to any one of claims 1 to 8, wherein a tensile strength of the array area of the at least one copper layer at room temperature is 15 kgf/mm$^2$ to 30 kgf/mm$^2$, and the tensile strength of the non-array area of the at least one copper layer at the room temperature is 30 kgf/mm$^2$ to 70 kgf/mm$^2$, and the room temperature is 25 ±5°C.

**10.** A preparation method of the electrolytic copper foil according to any one of claims 1 to 9, comprising:
placing an anode and a cathode to be plated in an electrolyte solution for electrolysis to obtain the electrolytic copper foil, wherein the cathode is provided with insulating shielding dots arranged in an array.

**11.** The preparation method of the electrolytic copper foil according to claim 10, wherein the electrolyte solution comprises copper ions, sulfuric acid, halogen ions, and an organic additive; wherein

optionally, a concentration of the copper ions in the electrolyte solution is 70 g/L to 130 g/L;
optionally, a concentration of the sulfuric acid in the electrolyte solution is 80 g/L to 150 g/L;
optionally, a concentration of the halogen ions in the electrolyte solution is 15 mg/L to 50 mg/L; and
optionally, a concentration of the organic additive in the electrolyte solution is 20 mg/L to 500 mg/L.

**12.** The preparation method of the electrolytic copper foil according to claim 11, wherein the organic additive comprises a leveling agent, a brightener, and a wetting agent, wherein

the leveling agent is a nitrogen-containing compound, optionally comprising one or more of collagen, gelatin, thiourea, allyl thiourea, ethylene thiourea, and 2-amino-4-methylbenzothiazole, and optionally a mass concentration of the leveling agent in the electrolyte solution is 0.1 mg/L to 40 mg/L; and/or
the brightener is an organic bivalent sulfide, and optionally comprises one or more of bis-(sodium sulfopropyl)-disulfide, N,N-dimethyldithioformamide propylsolfonic acid sodium, sodium 3-mercaptopropane sulfonate, sodium 3-(benzothiazol-2-ylthio)-1-propanesulfonate, and isothiourea-propane sulfonate, and optionally a mass concentration of the brightener in the electrolyte solution is 0.1 mg/L to 400 mg; and/or
the wetting agent is a polyether compound, optionally comprising one or more of polyethylene glycol, hydroxyethyl cellulose, polypropylene glycol, allyl polyethylene glycol, and fatty amine polyoxyethylene ether, and optionally a mass concentration of the wetting agent in the electrolyte solution is 1 mg/L to 40 mg/L.

**13.** The preparation method of the electrolytic copper foil according to claim 10, wherein a temperature of the electrolyte solution during electrolysis is 45°C to 60°C.

**14.** A negative electrode plate, comprising the electrolytic copper foil according to any one of claims 1 to 9, or an

electrolytic copper foil prepared by the preparation method of the electrolytic copper foil according to any one of claims 10 to 13.

**15.** A secondary battery, comprising the negative electrode plate according to claim 14.

**16.** The secondary battery according to claim 15, wherein the secondary battery is a liquid battery, a semi-solid battery, or a solid-state battery.

**17.** An electric device, comprising the at least one secondary battery according to claim 16.

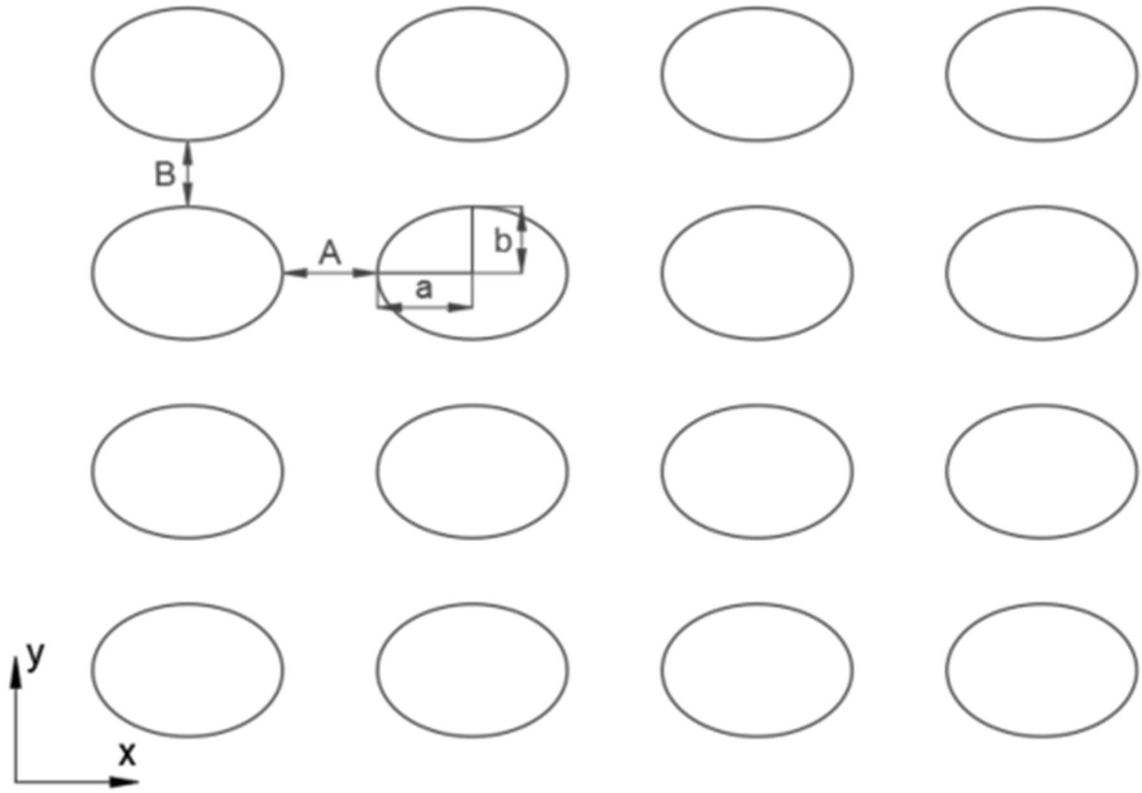


FIG. 1

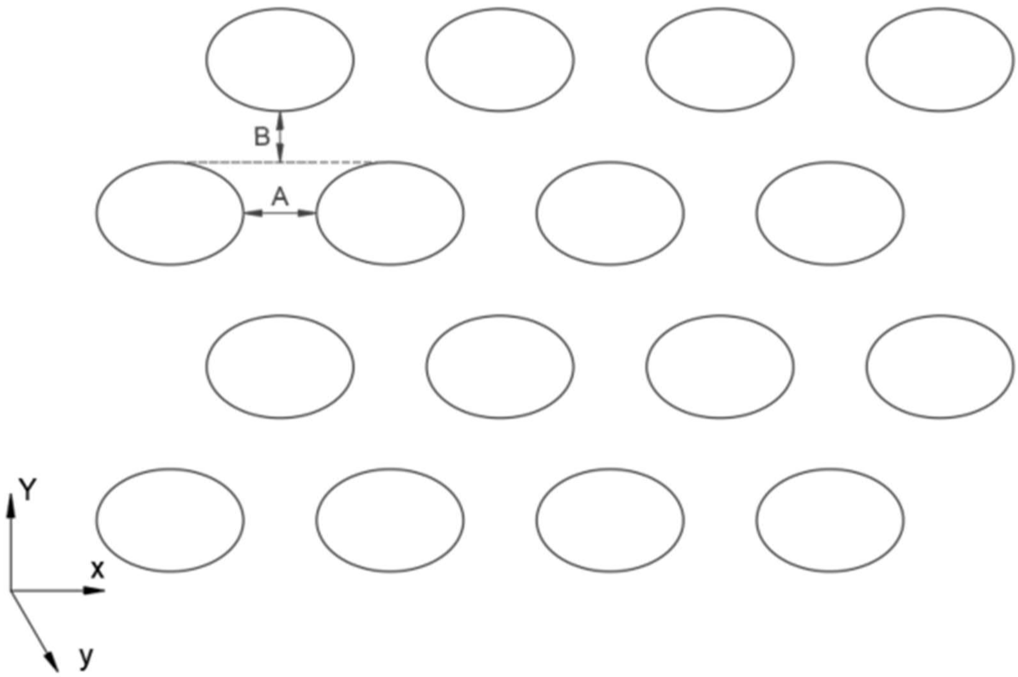


FIG. 2

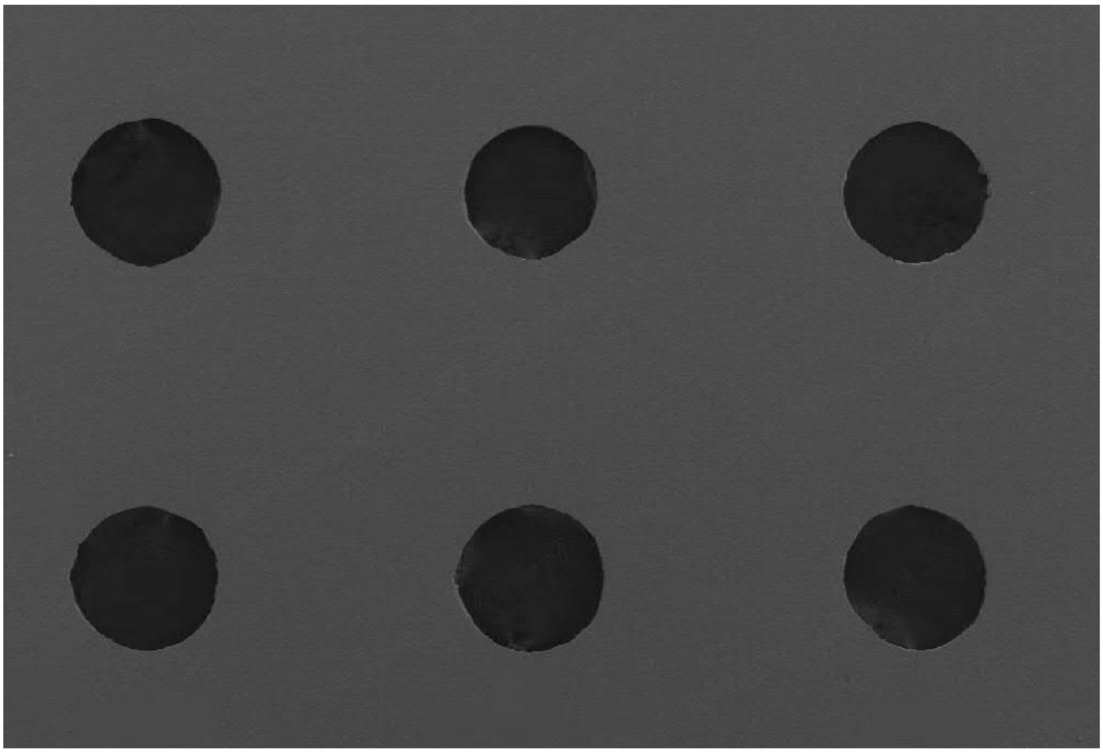

FIG. 3

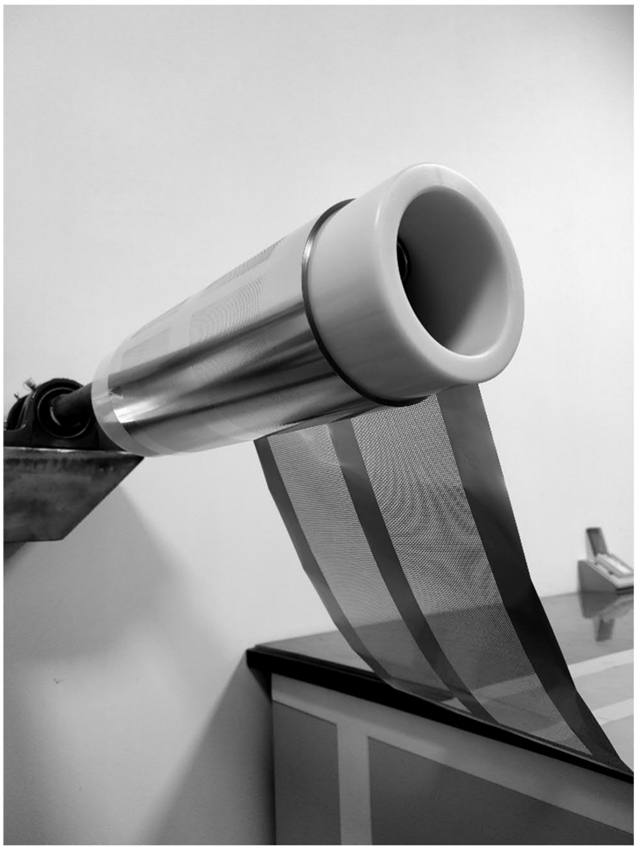

FIG. 4

## INTERNATIONAL SEARCH REPORT

International application No.
**PCT/CN2024/118888**

### A. CLASSIFICATION OF SUBJECT MATTER

C25D1/04(2006.01)i； H01M4/66(2006.01)i

According to International Patent Classification (IPC) or to both national classification and IPC

### B. FIELDS SEARCHED

Minimum documentation searched (classification system followed by classification symbols)

IPC:C25D H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, VEN, CNKI, web of science, 必应搜索, Bing Search: 多孔, 微孔, 通孔, (铜 5w箔), 重量, 质量, 抗拉强度, 机械强度, 拉断强度, 抗张强度, 拉伸断裂强度, 绝缘层, 绝缘凸点, 模板, 屏蔽版, 屏蔽点, 绝缘层, 屏蔽层, copper foil , hole, tensile strength, tensile strength, insulation layer, insulating bump, template, shielding point, Insulating laye, 九江德福科技股份有限公司, 周丰城, 刘超, 楚常顺, 文敏, 罗佳, 江泱

### C. DOCUMENTS CONSIDERED TO BE RELEVANT

| Category* | Citation of document, with indication, where appropriate, of the relevant passages | Relevant to claim No. |
|---|---|---|
| X | CN 116815257 A (JIUJIANG DEFU TECHNOLOGY CO., LTD.) 29 September 2023 (2023-09-29)<br>description, paragraphs 2-4, 30, 41-59 and 86, and embodiment 1, and figure 3 | 1-17 |
| X | CN 115786999 A (JIUJIANG DEFU TECHNOLOGY CO., LTD.) 14 March 2023 (2023-03-14)<br>description, embodiment 1, and paragraphs 19-29 and 42, and figures 2-5 | 1-17 |
| A | CN 108893761 A (SHANDONG UNIVERSITY OF TECHNOLOGY) 27 November 2018 (2018-11-27)<br>entire document | 1-17 |

☐ Further documents are listed in the continuation of Box C.　　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **2025-05-23** | **30 May 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/118888**

| Patent document cited in search report | | | Publication date (day/month/year) | Patent family member(s) | | | Publication date (day/month/year) |
|---|---|---|---|---|---|---|---|
| CN | 116815257 | A | 29 September 2023 | WO | 2024259774 | A1 | 26 December 2024 |
| CN | 115786999 | A | 14 March 2023 | | None | | |
| CN | 108893761 | A | 27 November 2018 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *GB/T29847-2013*